(19)

Europäisches
Patentamt
European
Patent Office
Office européen
des brevets

(11)  **EP 2 045 988 A1**

(12)  **EUROPEAN PATENT APPLICATION**
published in accordance with Art. 153(4) EPC

(43) Date of publication:
**08.04.2009  Bulletin 2009/15**

(21) Application number: **07788642.2**

(22) Date of filing: **29.06.2007**

(51) Int Cl.:
*H04L 25/02* (2006.01)    *H04L 27/00* (2006.01)

(86) International application number:
**PCT/ES2007/000395**

(87) International publication number:
**WO 2008/009762 (24.01.2008 Gazette 2008/04)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.07.2006  ES 200601942**

(71) Applicant: **SIDSA (Semiconductores Investigación) Y Diseño SA**
**28760 Trescantos Madrid (ES)**

(72) Inventors:
• **INSENSER FARRÉ, José María**
**28760 Trescantos Madrid (ES)**

• **HERNANZ CHILOECHES, Daniel**
**28760 Trescantos Madrid (ES)**
• **PÉREZ DE ARANDA ALONSO, Rubén**
**28760 Trescantos Madrid (ES)**
• **PARDO VIDAL, Carlos**
**28760 Trescantos Madrid (ES)**

(74) Representative: **Gulde Hengelhaupt Ziebig & Schneider**
**Patentanwälte - Rechtsanwälte**
**Wallstrasse 58/59**
**10179 Berlin (DE)**

(54)  **METHOD AND SYSTEM FOR MULTIPLE INPUT AND MULTIPLE OUTPUT CHANNEL ESTIMATION**

(57)    The invention relates to a method and system for multiple input and multiple output channel estimation, which can be used to generate and correlate sets of complementary sequences of length N, having a number of elements K greater than or equal to two. According to the invention, a block is used to generate sequences and to convolve same with an input signal, after which they are sent directly, or modulated, to the transmission channel. Once they have been received, and optionally demodulated, they pass through a correlator filter such as to obtain the input signal convolved by the channel, having a noise level reduced by factor KN.

**EP 2 045 988 A1**

**Description**

**SECTOR OF THE ART**

This invention relates to the method of generation and detection, as well as the optimal framework of pilot sequences to allow estimation of the timing and frequency characteristics of data transmission and reception systems in multiple input and multiple output channels, abbreviated in English as MIMO (Multiple Input Multiple Output).

**STATE OF THE ART**

In recent years, the efforts to innovate and standardize the area of radio communications focused on MIMO techniques, the channel capacity of which increases proportionally according to the number of reception and transmission antennas, limited by estimation error [Yoo, T. and Goldsmith, A., "Capacity of Fading MIMO Channels with Channel Estimation Error," IEEE Int. Conf. on Communications (ICC), Paris, France, June, 2004] of the channel impulse response matrix. Practical application of Complementary Sets of Sequences (CSS) was already successfully tested in environments such as: OFDM (orthogonal frequency-division multiplexing) for reducing the Peak-to-Average Ratio [B. Tarokh, "Construction of OFDM M-QAM Sequences with Low Peak-to-Average Power Ratio," IEEE Trans. on Communications, vol. 51, no. 1, January 2003], MIMO Channel Estimation [S. Wang and A. Abdi, "periodic complementary sets of sequences-based MIMO frequency selective channel estimation," IEEE Commun. Lett., vol. 9, pp. 891-893, 2005], reduction of Multiple Access interference in CDMA (code division multiple access) environments [H. Chen, J. Yeh and N. Suehiro. "A multicarrier CDMA architecture based on orthogonal complementary codes for new generations of wideband wireless communications," IEEE Commun. Mag., vol. 39, no. 10, pp. 126-135. Oct. 2001], reduction of multitrajectory interference in UWB (Ultra Wide Band) [D. Wu, P. Spasojevic and I. Seskar, "Ternary Complementary Sets of Orthogonal Pulse Based UWB," Proceedings of the 37th Asilomar Conference on Signals, Systems and Computers, Vol. 2, pp 1776-1780, November 2003] and DSSS (direct-sequence spread spectrum) [Halford, K., Halford, S., Webster, M., and Andren, C., ""Complementary Code Keying for RAKE-based indoor Wireless Communication," Proceedings of the 1999 IEEE International Symposium on Circuits and Systems"].

A MIMO system provides a high gain in capacity by means of an increase in spatial dimensions. Nevertheless, the gain in capacity is reduced if the channel data is not perfect. In [A. Lapidoth and S. Moser, "Capacity bounds via duality with applications to multiple-antenna systems on flat- fading channels," IEEE Trans. Inform. Theory, vol. 49, pp. 2426-2467, Oct. 2003], it shows that in the absence of channel data, the MIMO capacity only increases dauble-logarithmically as a function of the SNR, and that the increase in spatial dimensions does not provide any benefit whatsoever. Under these circumstances, the MIMO system may achieve linear increments in capacity for practical SNR values provided that reasonable precision is obtained in the channel estimation.

According to [Spasojevic, P.; Georghiades, C. N. "Complementary sequences for ISI channel estimation," IEEE Transactions on Information Theory, Volume: 47 Issue: 3, March 2001. pp 1145-1152], the optimal method is the use of Complementary Sets of Sequences (CSS). These sets of sequences allow obtaining the least possible variance in estimation error described by the Cramer-Rao lower bound (CRLB):

$$\sigma_E^2 = \frac{N_o}{E_s} \frac{L}{KN} \qquad\qquad <1>$$

where Es/No is the signal to noise ratio per symbol, L is the channel response length, K is the number of sequences of each set and N is the length of each sequence. This equation shows that the improvement in the estimation is proportional to the KN factor.

This method can be applied to traditional communication systems [Spasojevic, P.; Georghiades, C. N. "Complementary sequences for ISI channel estimation" IEEE Transactions on Information Theory, Volume: 47 Issue: 3, March 2001. pp 1145-1152] and MIMO systems [S. Wang and A. Abdi, "Aperiodic complementary sets of sequences-based MIMO frequency selective channel estimation," IEEE Commun. Lett., vol. 9, pp. 891-893, 2005]. Both of the above-mentioned references use sets with two components (K=2), also called Golay sequences [MARCEL J. E. Golay "Complementary Series." IRE Transactions on Information Theory, April 1961, pp. 82-87], but it is possible to work with K>2 [C.-C. Tseng, C.L. Liu, "Complementary Sets of Sequences," IEEE Trans. Inform. Theory, Vol. IT-18, No. 5, pp. 644-651, Sept. 1972].

The principal property of the CSS is:

$$\sum_{i=0}^{K-1} r_{a_i a_i}[n] = KN\delta[n]$$

<2>

where $r_{xx}$ is the aperiodic autocorrelation of x. The sum of the autocorrelation of all of the sequences of the set is equal to KN for n=0 and 0 for n≠O (Krönecker delta multiplied by the KN factor).

Another interesting property is that there are K sets of sequences that are mutually uncorrelated (also called "pairs" or orthogonal sets):

$$\sum_{i=0}^{K-1} r_{a_i b_i}[n] = 0 \quad, \forall n$$

<3>

This allows K sets to be transmitted simultaneously. In [S. Wang and A. Abdi, "Aperiodic complementary sets of sequences-based MIMO frequency selective channel estimation," IEEE Commun. Lett., vol. 9, pp. 891-893, 2005], it is explained how the estimation may be made with two sets (K=2). For 5 MIMO systems with more than two transmission and reception antennas, this solution is not optimal because only 2 sets can be transmitted simultaneously and in order to transmit, it is necessary to leave open spaces in the frames, which causes an increase in length of the pilot sequences and reduces yield.

Golay sequences may be generated and detected efficiently by applying the systems defined in [S.Z. Budisin. "Efficient Pulse Compressor for Golay Complementary Sequences," Elec. Lett. Vol. 27, No 3, pp. 219-220, January 31, 1991] and [Popovic, B.M. Efficient Golay correlator." Electronics Letters, Volume: 35, Issue: 17, August 19, 1999 Pages: 1427-1428]. These structures are only valid for K=2.

In the structures defined in the preceding paragraph in order to make the correlation with a number of transmitters $N_T$, greater than two, and to obtain a perfect separation between data and training symbols, and to avoid interference between frames, it is necessary to insert "silences" in the frames by introducing zeros. The number of zeros is equal to:

$$Z = \left( \left\lceil \frac{N_T}{2} \right\rceil - 1 \right)(L+1)$$

<4>

where L is the channel response length. The length in symbols of the 25 pilot sequences or training sequences of the frame required for channel estimation is equal to K(Z+N).

The proposed invention reduces the length of the pilots with respect to the prior method and proposes a new architecture to generate and detect/correlate CSCs with K≥2. The reduction is due to the fact that it is not necessary to insert zeros (Z=O) provided that K is equal to the number of transmission and reception antennas. For this, an architecture is necessary that allows generation and correlation of CSCs with K≥2.

Both the method proposed by [Popovic, B. M. "Efficient Golay correlator." Electronics Letters, Volume: 35, Issue: 17, August 19, 1999 Pages: 1427-1428] as well as the method proposed by [S. Wang and A. Abdi, "Aperiodic complementary sets ofsequences-based MIMO frequency selective channel estimation," IEEE Commun. Lett., vol. 9, pp. 891-893, 2005] are patented: [Popovic, Branislav, "Method and apparatus for efficient synchronization in spread spectrum Communications" PCT/SE00/00433] and [Shuangquan Wang and Ali Adbi, "Systems and/or Method for Channel Estimation in Communication Systems," United States Provisional Patent Application No. 60/645,526. United States Application No. 11/336,018] respectively. The current patent may be considered a patent that resolves the same problem as the patent of S. Wang, but more efficiently and in the case of the detection/correlation system, generalization of the method patented by B. Popovic for K greater than 2.

For sets of four sequences (K=4), a similar architecture has been described [F. J. Álvarez, et. al., "Efficient generator and pulse compressor for complementary sets of tour sequences." IEEE Electronic Letters, vol. 40, no. 11, pp 703-704, May 2004] that cannot be considered as particularization of the algorithm proposed in this invention, since the order of operations and coefficients varies. The main advantage of the architecture proposed in this invention in relation to that of F.J. Álvarez is the possibility of changing K without changing the structure, thus being able to work in a single embodiment with several K. including only multiplexors, and in the proposal of F.J. Álvarez, the structure is designed specifically for K=4.

A previously patented method exists that describes how to transmit pairs of complementary sequences simultaneously using complex modulations [Vicente Díaz, "Method, transmitter and receiver for spread-spectrum digital communication by Golay complementary sequence modulation" PCT/ES01/00160 patent. August 16, 2000. Granted in Spain as P200002086]. This method, unlike the one presented in this patent, is designed to modulate data with complementary sequences and not transmit preambles with K equal to the number of inputs and outputs of a MIMO system. Another difference is that the method is designed to transmit sequences with K=2 and not for K>2 as in this patent. This patent is also registered in the United States as [Vicente Díaz et al. "Device and Method for improving the signal to noise ratio by means of complementary sequences" U.S. patent application number 10/832,138. April 26, 2004].

The same occurs with the patent [Vicente Díaz et al. "Device and method for the optimal estimation of distortion of a transmission medium, comprising the sequential emission of pairs of quadrature complementary sequences," Spanish Patent Application No. P200401299. May 4, 2004]. In this case, a general method is presented for estimation with K=2. No optimal algorithm is indicated for generation and correlation. No optimal method is indicated for MIMO systems. This patent is filed in the United States as [Vicente Díaz et al. "Device and Method for optimally estimating the transmission spectrum by means of the simultaneous modulation of complementary sequences." U.S. patent application number 10/835,843. April 29, 2004.]

**EXPLANATION OF THE INVENTION**

This invention relates to a method and system for precise estimation of a MIMO channel that allows the maximum capacity of said channel to be achieved.

This proposed invention is based on [S. Wang and A. Abdi, "Aperiodic complementary sets of sequences-based MIMO frequency selective channel estimation," IEEE Commun. Lett, vol. 9, pp. 891-893, 2005], adding some improvements: increase K without changing the header frame or reducing the header frame without changing the KN factor and using a new system to allow CSCs with K greater than 2 to be generated and detected.

Generation of complementary sets of sequences is based on the general algorithm explained in the 7th theorem of [Complementary Sets of Sequences, C.C. Tseng and C. L. Liu]:

With $(_j s, 1 \leq j \leq p)$ being a complementary set. H an orthogonal matrix q x p with elements $h_{ij} \in \{+1. -1\}$ and $P|Q$ indicates concatenation of sequences, therefore:

$$\left(S_1^{h11} \mid S_2^{h12} \mid \cdots \mid S_p^{h1p}, S_1^{h21} \mid S_2^{h22} \mid \cdots \mid S_p^{h2p}, \cdots, S_1^{hq1} \mid S_2^{hq2} \mid \cdots \mid S_p^{hqp}\right) \equiv \left(\prod_{j=1}^{p} S_j^{hij}, 1 \leq i \leq q\right) \qquad <5>$$

is a complementary set of q sequences.

The Hadamard matrices comply with the properties defined for H, and therefore may be used in the generation algorithm with the restriction that they are square matrices p = q. The generation of all sets of sequences that comply with these properties is based on the two possible matrices of the order 2x2:

$$H_1 = \begin{bmatrix} +1 & +1 \\ +1 & -1 \end{bmatrix}, \quad H_2 = \begin{bmatrix} +1 & -1 \\ +1 & +1 \end{bmatrix} \qquad <6>$$

Both matrices may be generated as:

$$H = \begin{bmatrix} +1 & +w \\ +1 & -w \end{bmatrix}, \forall |w| = 1 \qquad <7>$$

Matrices with a greater range that continue to comply with the properties of H may be generated as follows:

$$H' = H \times H = \begin{bmatrix} H & w'H \\ H & -w'H \end{bmatrix}, \forall |w'| = 1 \qquad \text{<8>}$$

For example, for a matrix p x p, the following matrix is obtained:

$$H = \begin{bmatrix}
+1 & +w_1 & +w_2 & +w_1w_2 & \cdots & +w_p & +w_1w_p & \cdots & +w_1w_2\ldots w_p \\
+1 & -w_1 & +w_2 & -w_1w_2 & \cdots & +w_p & -w_1w_p & \cdots & -w_1w_2\ldots w_p \\
+1 & +w_1 & -w_2 & -w_1w_2 & \cdots & +w_p & +w_1w_p & \cdots & -w_1w_2\ldots w_p \\
+1 & -w_1 & -w_2 & +w_1w_2 & \cdots & +w_p & -w_1w_p & \cdots & +w_1w_2\ldots w_p \\
\vdots & \vdots & \vdots & \vdots & \ddots & \vdots & \vdots & \ddots & \vdots \\
+1 & +w_1 & +w_2 & +w_1w_2 & \cdots & -w_p & -w_1w_p & \cdots & -w_1w_2\ldots w_p \\
+1 & -w_1 & +w_2 & -w_1w_2 & \cdots & -w_p & +w_1w_p & \cdots & +w_1w_2\ldots w_p \\
+1 & +w_1 & -w_2 & -w_1w_2 & \cdots & -w_p & -w_1w_p & \cdots & +w_1w_2\ldots w_p \\
+1 & -w_1 & -w_2 & +w_1w_2 & \cdots & -w_p & +w_1w_p & \cdots & -w_1w_2\ldots w_p
\end{bmatrix} \qquad \text{<9>}$$

The generation algorithm may be described iteratively, by extending the explanation in [S.Z. Budisin. "Efficient Pulse Compressor for Golay Complementary 5 Sequences." Elec. Lett. Vol. 27, No 3, pp. 219-220, January 31, 1991] to sets of K sequences, knowing that in each iteration n ($0<n\leq N$) the coefficients $w_x$ may be modified, which are expressed as $w_{x,n}$. The length of the sequences generated is $L = K^N$. In order to obtain optimal architecture, the same idea of [S.Z. Budisin. "Efficient Pulse Compressor for Golay Complementary 5 Sequences." Elec. Lett. Vol. 27, No. 3, pp. 219-220, January 31, 1991] may be extended to sets of $K=2^p\leq 2$: the delay elements $D_n$ are selected from the following set and in this order: $\{K^{N-1},..., K^1, K^0\}$. With these indications, the general algorithm is as follows:

$$c_{1,0}[i] = c_{2,0}[i] = c_{3,0}[i] = \ldots = c_{M,0}[i] = \delta[i]$$

$$c_{1,n}[i] = \quad c_{1,n-1}[i] + w_{1,n}c_{2,n-1}[i - D_n] + w_{2,n}c_{3,n-1}[i - 2D_n] + w_{1,n}w_{2,n}c_{4,n-1}[i - 3D_n] + \ldots$$
$$\ldots + w_{p,n}c_{K,n-1}[i - (K/2 - 1)D_n] + w_{1,n}w_{p,n}c_{K,n-1}[i - (K/2)D_n] + \ldots$$
$$\ldots + w_{1,n}w_{2,n}\ldots w_{p,n}c_{K,n-1}[i - (K-1)D_n]$$

$$c_{2,n}[i] = \quad c_{1,n-1}[i] - w_{1,n}c_{2,n-1}[i - D_n] + w_{2,n}c_{3,n-1}[i - 2D_n] - w_{1,n}w_{2,n}c_{4,n-1}[i - 3D_n] + \ldots$$
$$\ldots + w_{p,n}c_{K,n-1}[i - (K/2 - 1)D_n] - w_{1,n}w_{p,n}c_{K,n-1}[i - (K/2)D_n] - \ldots$$
$$\ldots - w_{1,n}w_{2,n}\ldots w_{p,n}c_{K,n-1}[i - (K-1)D_n]$$

$$c_{3,n}[i] = \quad c_{1,n-1}[i] + w_{1,n}c_{2,n-1}[i - D_n] - w_{2,n}c_{3,n-1}[i - 2D_n] - w_{1,n}w_{2,n}c_{4,n-1}[i - 3D_n] + \ldots$$
$$\ldots + w_{p,n}c_{K,n-1}[i - (K/2 - 1)D_n] + w_{1,n}w_{p,n}c_{K,n-1}[i - (K/2)D_n] + \ldots$$
$$\ldots - w_{1,n}w_{2,n}\ldots w_{p,n}c_{K,n-1}[i - (K-1)D_n]$$

$$c_{4,n}[i] = \quad c_{1,n-1}[i] - w_{1,n}c_{2,n-1}[i - D_n] - w_{2,n}c_{3,n-1}[i - 2D_n] + w_{1,n}w_{2,n}c_{4,n-1}[i - 3D_n] + \ldots$$
$$\ldots + w_{p,n}c_{K,n-1}[i - (K/2 - 1)D_n] - w_{1,n}w_{p,n}c_{K,n-1}[i - (K/2)D_n] + \ldots$$
$$\ldots + w_{1,n}w_{2,n}\ldots w_{p,n}c_{K,n-1}[i - (K-1)D_n]$$

$$\ldots$$

$$c_{K,n}[i] = \quad c_{1,n-1}[i] - w_{1,n}c_{2,n-1}[i - D_n] - w_{2,n}c_{3,n-1}[i - 2D_n] + w_{1,n}w_{2,n}c_{4,n-1}[i - 3D_n] + \ldots$$
$$\ldots - w_{p,n}c_{K,n-1}[i - (K/2 - 1)D_n] + w_{1,n}w_{p,n}c_{K,n-1}[i - (K/2)D_n] - \ldots$$
$$\ldots - w_{1,n}w_{2,n}\ldots w_{p,n}c_{K,n-1}[i - (K-1)D_n]$$

<10>

where $\{c_{1,n}, c_{2,n}, c_{3,n}, c_{1,n}, \ldots c_{M,n}\}$ represents four complementary sequences with length $L = K^N$, $\delta[i]$ is the Kronecker delta and n ($0 < n \leq N$) the iteration number.

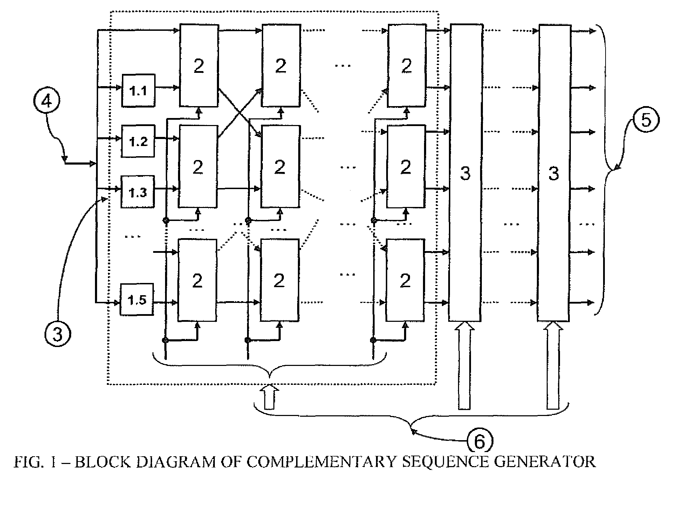

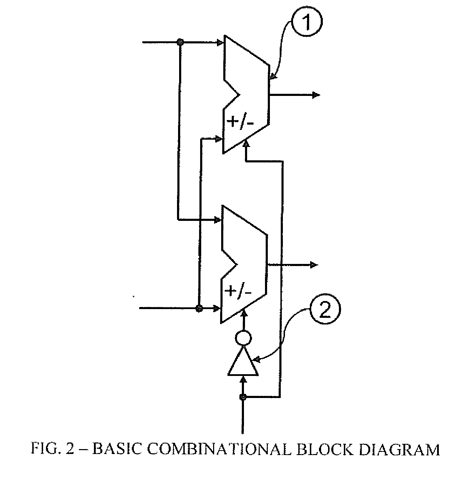

The block diagram (see figure 1) of the system that allows this algorithm to be generated is obtained by applying the transformed Z to the above-mentioned expressions, thus obtaining a lattice system with N identical phases, one of which has K-1 FIFO (First-Input First-Output) memory and $K\log_2 K$ addition or subtraction operations. The addition or subtraction operations are grouped by 2 in a functional block (see figure 2).

$$C_{1,0} = C_{2,0} = C_{3,0} = \ldots = C_{M,0} = 1$$

$$
\begin{aligned}
C_{1,n}[z] = \; & C_{1,n-1}[z] + w_{1,n}C_{2,n-1}[z]z^{-D_n} + w_{2,n}C_{3,n-1}[z]z^{-2D_n} + w_{1,n}w_{2,n}C_{4,n-1}[z]z^{-3D_n} + \ldots \\
& \ldots + w_{p,n}C_{K,n-1}[z]z^{-(K/2-1)D_n} + w_{1,n}w_{p,n}C_{K,n-1}[z]z^{-(K/2)D_n} + \ldots \\
& \ldots + w_{1,n}w_{2,n}\ldots w_{p,n}C_{K,n-1}[z]z^{-(K-1)D_n}
\end{aligned}
$$

$$
\begin{aligned}
C_{2,n}[z] = \; & C_{1,n-1}[z] - w_{1,n}C_{2,n-1}[z]z^{-D_n} + w_{2,n}C_{3,n-1}[z]z^{-2D_n} - w_{1,n}w_{2,n}C_{4,n-1}[z]z^{-3D_n} + \ldots \\
& \ldots + w_{p,n}C_{K,n-1}[z]z^{-(K/2-1)D_n} - w_{1,n}w_{p,n}C_{K,n-1}[z]z^{-(K/2)D_n} - \ldots \\
& \ldots - w_{1,n}w_{2,n}\ldots w_{p,n}C_{K,n-1}[z]z^{-(K-1)D_n}
\end{aligned}
$$

$$
\begin{aligned}
C_{3,n}[z] = \; & C_{1,n-1}[z] + w_{1,n}C_{2,n-1}[z]z^{-D_n} - w_{2,n}C_{3,n-1}[z]z^{-2D_n} - w_{1,n}w_{2,n}C_{4,n-1}[z]z^{-3D_n} + \ldots \\
& \ldots + w_{p,n}C_{K,n-1}[z]z^{-(K/2-1)D_n} + w_{1,n}w_{p,n}C_{K,n-1}[z]z^{-(K/2)D_n} - \ldots \\
& \ldots - w_{1,n}w_{2,n}\ldots w_{p,n}C_{K,n-1}[z]z^{-(K-1)D_n}
\end{aligned}
$$

$$
\begin{aligned}
C_{4,n}[z] = \; & C_{1,n-1}[z] - w_{1,n}C_{2,n-1}[z]z^{-D_n} - w_{2,n}C_{3,n-1}[z]z^{-2D_n} + w_{1,n}w_{2,n}C_{4,n-1}[z]z^{-3D_n} + \ldots \\
& \ldots + w_{p,n}C_{K,n-1}[z]z^{-(K/2-1)D_n} - w_{1,n}w_{p,n}C_{K,n-1}[z]z^{-(K/2)D_n} + \ldots \\
& \ldots + w_{1,n}w_{2,n}\ldots w_{p,n}C_{K,n-1}[z]z^{-(M-1)D_n}
\end{aligned}
$$

$$\ldots$$

$$
\begin{aligned}
C_{K,n}[z] = \; & C_{1,n-1}[z] - w_{1,n}C_{2,n-1}[z]z^{-D_n} - w_{2,n}C_{3,n-1}[z]z^{-2D_n} + w_{1,n}w_{2,n}C_{4,n-1}[z]z^{-3D_n} + \ldots \\
& \ldots - w_{p,n}C_{K,n-1}[z]z^{-(K/2-1)D_n} + w_{1,n}w_{p,n}C_{K,n-1}[z]z^{-(K/2)D_n} - \ldots \\
& \ldots - w_{1,n}w_{2,n}\ldots w_{p,n}C_{K,n-1}[z]z^{-(K-1)D_n}
\end{aligned}
$$

<11>

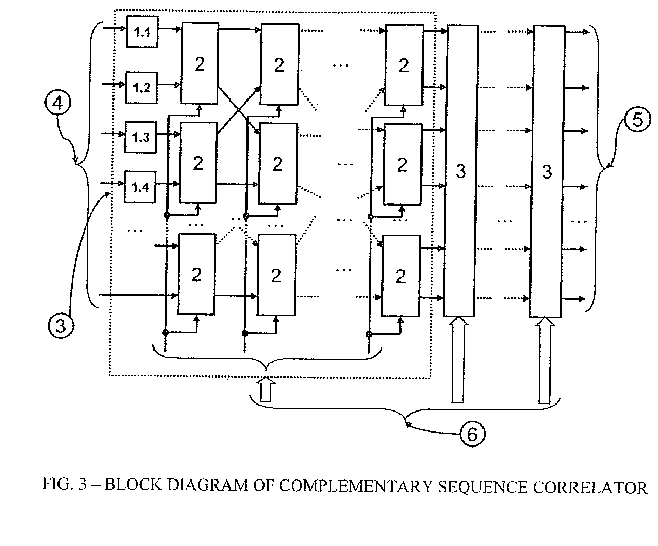

If the original algorithm is modified to generate the reflected sequences $\{c'_{1,n}, c'_{2,n}, c'_{3,n}, c'_{3,n}, \ldots c'_{M,n}\}$ by extending to sets of K sequences the same idea as in [Popovic, Branislav, "Method and apparatus for efficient synchronization in spread spectrum Communications" PCT/SE00/00433] for $K \geq 2$, the correlator or matched filter is obtained (see figure 3) which allows correlation of sequences to be obtained efficiently. The correlator system may also be used as a generator. In this case, the generator filter described above will be used as a matched filter. The analytical expression for the matched filter or correlator is:

$$C_{1,n}[z] = C_{1,n-1}[z]z^{-(K-1)D_n} + w_{1,n}C_{2,n-1}[z]z^{-(K-2)D_n} + w_{2,n}C_{3,n-1}[z]z^{-(K-3)D_n} + w_{1,n}w_{2,n}C_{4,n-1}[z]z^{-(K-3)D_n} + \dots$$
$$\dots + w_{p,n}C_{K,n-1}[z]z^{-(\frac{K}{2}-2)D_n} + w_{1,n}w_{p,n}C_{K,n-1}[z]z^{-(\frac{K}{2}-3)D_n} + \dots$$
$$\dots + w_{1,n}w_{2,n}\dots w_{p,n}C_{K,n-1}[z]$$

$$C_{2,n}[z] = C_{1,n-1}[z]z^{-(K-1)D_n} - w_{1,n}C_{2,n-1}[z]z^{-(K-2)D_n} + w_{2,n}C_{3,n-1}[z]z^{-(K-3)D_n} - w_{1,n}w_{2,n}C_{4,n-1}[z]z^{-(K-3)D_n} + \dots$$
$$\dots + w_{p,n}C_{K,n-1}[z]z^{-(\frac{K}{2}-2)D_n} - w_{1,n}w_{p,n}C_{K,n-1}[z]z^{-(\frac{K}{2}-3)D_n} + \dots$$
$$\dots - w_{1,n}w_{2,n}\dots w_{p,n}C_{K,n-1}[z]$$

$$C_{3,n}[z] = C_{1,n-1}[z]z^{-(K-1)D_n} + w_{1,n}C_{2,n-1}[z]z^{-(K-2)D_n} - w_{2,n}C_{3,n-1}[z]z^{-(K-3)D_n} - w_{1,n}w_{2,n}C_{4,n-1}[z]z^{-(K-3)D_n} + \dots$$
$$\dots + w_{p,n}C_{K,n-1}[z]z^{-(\frac{K}{2}-2)D_n} + w_{1,n}w_{p,n}C_{K,n-1}[z]z^{-(\frac{K}{2}-3)D_n} - \dots$$
$$\dots - w_{1,n}w_{2,n}\dots w_{p,n}C_{K,n-1}[z]$$

$$C_{4,n}[z] = C_{1,n-1}[z]z^{-(K-1)D_n} - w_{1,n}C_{2,n-1}[z]z^{-(K-2)D_n} - w_{2,n}C_{3,n-1}[z]z^{-(K-3)D_n} + w_{1,n}w_{2,n}C_{4,n-1}[z]z^{-(K-3)D_n} + \dots$$
$$\dots + w_{p,n}C_{K,n-1}[z]z^{-(\frac{K}{2}-2)D_n} - w_{1,n}w_{p,n}C_{K,n-1}[z]z^{-(\frac{K}{2}-3)D_n} + \dots$$
$$\dots + w_{1,n}w_{2,n}\dots w_{p,n}C_{K,n-1}[z]$$

$$\dots$$

$$C_{M,n}[z] = C_{1,n-1}[z]z^{-(K-1)D_n} - w_{1,n}C_{2,n-1}[z]z^{-(K-2)D_n} - w_{2,n}C_{3,n-1}[z]z^{-(K-3)D_n} + w_{1,n}w_{2,n}C_{4,n-1}[z]z^{-(K-3)D_n} - \dots$$
$$\dots - w_{p,n}C_{K,n-1}[z]z^{-(\frac{K}{2}-2)D_n} + w_{1,n}w_{p,n}C_{K,n-1}[z]z^{-(\frac{K}{2}-3)D_n} - \dots$$
$$\dots - w_{1,n}w_{2,n}\dots w_{p,n}C_{K,n-1}[z]$$

<12>

For response detection, it is necessary to add the correlations.

**BRIEF DESCRIPTION OF DRAWINGS**

Figure 1 shows the structure of the complementary sequences generator. The various components are detailed below:

1. Delay elements. Each of them is different, and their delay is defined according to expression <11>.

2. Basic combinational block described in Figure 2.

3. Basic generator phase.

4. Input of signal to be convoluted.

5. Output of complementary sequences.

6. Input of coefficients.

Figure 2 shows the structure of the basic combinational block:

1. Addition/subtraction element. It performs the addition of the input signals.

2. Inversion element. It changes the sign of the input signal.

Figure 3 shows the structure of the complementary sequences generator. The various components are detailed below:

1. Delay elements. Each of them is different, and their delay is defined according to expression <12>.

2. Basic combinational block described in Figure 2.

3. Basic correlator phase.

4. Input of signal to be convoluted.

5. Output of complementary sequences.

6. Input of coefficients.

**Claims**

1.  A method for generating complementary sets of sequences that entails:

    A filter that allows complementary sequences to be convoluted with any signal;
    An optional addition block that allows the outputs of the generators to be added for simultaneous transmission
    of sets of complementary sequences;
    A multiplexor block that allows multiplexing of the sequences generated with the data to be transmitted.

2.  A method to detect or correlate complementary sets of sequences that entails:

    A matched filter for making the correlation with the complementary sets of sequences transmitted;
    An addition block for adding the correlations;
    A detection block for estimation and/or storage of the channel response.

3.  The methods according to claims 1 and 2 wherein each complementary sequence has an autocorrelation with
    minimum side lobes and a maximum main lobe for a null delay of said complementary sequence.

4.  The methods according to claims 1 and 2 that further includes:

    The use of the autocorrelation values to estimate the timing and frequency response of the means of transmission.

5.  The method according to claim 1 wherein all of the complementary sets of sequences are generated simultaneously.

6.  The method according to claim 2 wherein all of the complementary sets of sequences are correlated simultaneously.

7.  The method according to claim 1 wherein all of the complementary sets of sequences are generated recursively.

8.  The method according to claim 2 wherein all of the complementary sets of sequences are correlated recursively.

9.  The method according to claim 1 wherein all of the complementary sets of sequences are generated iteratively.

10. The method according to claim 2 wherein all of the complementary sets of sequences are correlated iteratively.

11. The methods according to claims 1 and 2 wherein the transmitter is a base station and the receiver is a mobile or
    fixed device, and wherein the complementary sequences are used as part of the frame of data transmitted from the
    base station to the receiver and/or vice versa.

12. The methods according to claims 1 and 2 wherein the transmitter is a modem and the receiver is another modem,
    and wherein the complementary sequences are used as part of the frame of data transmitted from the base station
    to the receiver and/or vice versa.

13. The methods according to claims 1 and 2 wherein the transmitter is a sonar/radar system and the receiver is another
    sonar/radar system, and wherein the complementary sequences are used as the sequence transmitted to detect
    the target and/or its properties.

**14.** The methods according to claims 1 and 2 wherein the transmitter and the receiver are the same sonar/radar system, and wherein the complementary sequences are used as the sequence transmitted to detect the target and/or its properties.

**15.** The methods according to claims 1 and 2 wherein the transmitted sequences are complementary sequences, which are understood to be sequences with correlation, the total of whose aperiodic autocorrelations is zero for any movement except for null movement.

**16.** The method according to claim 13 wherein each complementary sequence is generated by concatenating a pair of smaller sequences.

**17.** The methods according to claims 11 and 12 wherein the result of detection and/or correlation is used as a timing reference to synchronize the system.

**18.** The method according to claim 1 wherein the transmitted sequences are generated according to the following algorithm:

$$c_{1,0}[i] = c_{2,0}[i] = c_{3,0}[i] = \ldots = c_{M,0}[i] = \delta[i]$$

$$c_{1,n}[i] = c_{1,n-1}[i] + w_{1,n}c_{2,n-1}[i - D_n] + w_{2,n}c_{3,n-1}[i - 2D_n] + w_{1,n}w_{2,n}c_{4,n-1}[i - 3D_n] + \ldots$$
$$\ldots + w_{p,n}c_{K,n-1}[i - (K/2 - 1)D_n] + w_{1,n}w_{p,n}c_{K,n-1}[i - (K/2)D_n] + \ldots$$
$$\ldots + w_{1,n}w_{2,n}\ldots w_{p,n}c_{K,n-1}[i - (K-1)D_n]$$

$$c_{2,n}[i] = c_{1,n-1}[i] - w_{1,n}c_{2,n-1}[i - D_n] + w_{2,n}c_{3,n-1}[i - 2D_n] - w_{1,n}w_{2,n}c_{4,n-1}[i - 3D_n] + \ldots$$
$$\ldots + w_{p,n}c_{K,n-1}[i - (K/2 - 1)D_n] - w_{1,n}w_{p,n}c_{K,n-1}[i - (K/2)D_n] - \ldots$$
$$\ldots - w_{1,n}w_{2,n}\ldots w_{p,n}c_{K,n-1}[i - (K-1)D_n]$$

$$c_{3,n}[i] = c_{1,n-1}[i] + w_{1,n}c_{2,n-1}[i - D_n] - w_{2,n}c_{3,n-1}[i - 2D_n] - w_{1,n}w_{2,n}c_{4,n-1}[i - 3D_n] + \ldots$$
$$\ldots + w_{p,n}c_{K,n-1}[i - (K/2 - 1)D_n] + w_{1,n}w_{p,n}c_{K,n-1}[i - (K/2)D_n] + \ldots$$
$$\ldots - w_{1,n}w_{2,n}\ldots w_{p,n}c_{K,n-1}[i - (K-1)D_n]$$

$$c_{4,n}[i] = c_{1,n-1}[i] - w_{1,n}c_{2,n-1}[i - D_n] - w_{2,n}c_{3,n-1}[i - 2D_n] + w_{1,n}w_{2,n}c_{4,n-1}[i - 3D_n] + \ldots$$
$$\ldots + w_{p,n}c_{K,n-1}[i - (K/2 - 1)D_n] - w_{1,n}w_{p,n}c_{K,n-1}[i - (K/2)D_n] + \ldots$$
$$\ldots + w_{1,n}w_{2,n}\ldots w_{p,n}c_{K,n-1}[i - (K-1)D_n]$$

$$\ldots$$

$$c_{K,n}[i] = c_{1,n-1}[i] - w_{1,n}c_{2,n-1}[i - D_n] - w_{2,n}c_{3,n-1}[i - 2D_n] + w_{1,n}w_{2,n}c_{4,n-1}[i - 3D_n] + \ldots$$
$$\ldots - w_{p,n}c_{K,n-1}[i - (K/2 - 1)D_n] + w_{1,n}w_{p,n}c_{K,n-1}[i - (K/2)D_n] - \ldots$$
$$\ldots - w_{1,n}w_{2,n}\ldots w_{p,n}c_{K,n-1}[i - (K-1)D_n]$$

Where $i = 0,1,2,3,\cdots,2^N - 1$; $n=1,2,\ldots N$; $D_n = K^{Pn}$; $K = 2^p$ is the maximum number of complementary sets of orthogonal sequences among them; $\{c_{1,n}[i], c_{2,n}[i], \ldots, c_{K,n}[i]\}$ are a set of complementary sequences with a length $2^N$; $\delta[i]$ is the Kronecker delta function; i is a whole number that represents the scale of time; $n$ is the iteration number, $D_n$ is a delay element, $P_n, n = 1, 2, \ldots, 2^N$, is any permutation of the numbers $\{0,1,2,\ldots,N-1\}$; and $\{w_{1,n}, w_{2,n}, \ldots, w_{p,n}\}$ are P vectors of coefficients with length N where each $w_{x,y}$ is an arbitrary unit magnitude complex number;

**19.** The method according to claim 1 wherein the transmitted sequences are generated according to the following algorithm:

$$c_{1,0}[i] = c_{2,0}[i] = c_{3,0}[i] = \ldots = c_{M,0}[i] = \delta[i]$$

$$c_{1,n}[i] = c_{1,n-1}[i] + w_{1,n}c_{2,n-1}[i-(K-1)D_n] + w_{2,n}c_{3,n-1}[i-(K-2)D_n] + w_{1,n}w_{2,n}c_{4,n-1}[i-(K-3)D_n] + \ldots$$
$$\ldots + w_{p,n}c_{K,n-1}[i-(K/2-2)D_n] + w_{1,n}w_{p,n}c_{K,n-1}[i-(K/2-3)D_n] + \ldots$$
$$\ldots + w_{1,n}w_{2,n}\ldots w_{p,n}c_{K,n-1}[i]$$

$$c_{2,n}[i] = c_{1,n-1}[i] - w_{1,n}c_{2,n-1}[i-(K-1)D_n] + w_{2,n}c_{3,n-1}[i-(K-2)D_n] - w_{1,n}w_{2,n}c_{4,n-1}[i-(K-3)D_n] + \ldots$$
$$\ldots + w_{p,n}c_{K,n-1}[i-(K/2-2)D_n] - w_{1,n}w_{p,n}c_{K,n-1}[i-(K/2-3)D_n] - \ldots$$
$$\ldots - w_{1,n}w_{2,n}\ldots w_{p,n}c_{K,n-1}[i]$$

$$c_{3,n}[i] = c_{1,n-1}[i] + w_{1,n}c_{2,n-1}[i-(K-1)D_n] - w_{2,n}c_{3,n-1}[i-(K-2)D_n] - w_{1,n}w_{2,n}c_{4,n-1}[i-(K-3)D_n] + \ldots$$
$$\ldots + w_{p,n}c_{K,n-1}[i-(K/2-2)D_n] + w_{1,n}w_{p,n}c_{K,n-1}[i-(K/2-3)D_n] + \ldots$$
$$\ldots - w_{1,n}w_{2,n}\ldots w_{p,n}c_{K,n-1}[i]$$

$$c_{4,n}[i] = c_{1,n-1}[i] - w_{1,n}c_{2,n-1}[i-(K-1)D_n] - w_{2,n}c_{3,n-1}[i-(K-2)D_n] + w_{1,n}w_{2,n}c_{4,n-1}[i-(K-3)D_n] + \ldots$$
$$\ldots + w_{p,n}c_{K,n-1}[i-(K/2-2)D_n] - w_{1,n}w_{p,n}c_{K,n-1}[i-(K/2-3)D_n] + \ldots$$
$$\ldots + w_{1,n}w_{2,n}\ldots w_{p,n}c_{K,n-1}[i]$$

$$\ldots$$

$$c_{K,n}[i] = c_{1,n-1}[i] - w_{1,n}c_{2,n-1}[i-(K-1)D_n] - w_{2,n}c_{3,n-1}[i-(K-2)D_n] + w_{1,n}w_{2,n}c_{4,n-1}[i-(K-3)D_n] + \ldots$$
$$\ldots - w_{p,n}c_{K,n-1}[i-(K/2-2)D_n] + w_{1,n}w_{p,n}c_{K,n-1}[i-(K/2-3)D_n] - \ldots$$
$$\ldots - w_{1,n}w_{2,n}\ldots w_{p,n}c_{K,n-1}[i]$$

where i = 0,1,2,3,$\cdots$,$2^N$ - 1; n=1,2,...N; $D_n = K^{P_n}$; $K = 2^p$ is the maximum number of complementary sets of orthogonal sequences among them; $\{c_{1,n}[i], c_{2,n}[i], \ldots c_{K,n}[i]\}$ are a set of complementary sequences with a length $2^N$; $\delta[i]$ is the Kronecker delta function; i is a whole number that represents the scale of time; $n$ is the iteration number, $D_n$ is a delay element, $P_n$, n=1,2,...,$2^N$, is any permutation of the numbers $\{0,1,2,..., N-1\}$; and $\{w_{1,n}, w_{2,n},..., w_{p,n}\}$ are P vectors of coefficients with length N where each $w_{x,y}$ is an arbitrary unit magnitude complex number;

20. The method according to claims 2 wherein the sequences are detected and/or correlated according to the following algorithm:

EP 2 045 988 A1

$$c_{1,n}[i] = c_{1,n-1}[i] + w_{1,n}c_{2,n-1}[i - D_n] + w_{2,n}c_{3,n-1}[i - 2D_n] + w_{1,n}w_{2,n}c_{4,n-1}[i - 3D_n] + \dots$$
$$\dots + w_{p,n}c_{K,n-1}[i - (K/2 - 1)D_n] + w_{1,n}w_{p,n}c_{K,n-1}[i - (K/2)D_n] + \dots$$
$$\dots + w_{1,n}w_{2,n}\dots w_{p,n}c_{K,n-1}[i - (K-1)D_n]$$

$$c_{2,n}[i] = c_{1,n-1}[i] - w_{1,n}c_{2,n-1}[i - D_n] + w_{2,n}c_{3,n-1}[i - 2D_n] - w_{1,n}w_{2,n}c_{4,n-1}[i - 3D_n] + \dots$$
$$\dots + w_{p,n}c_{K,n-1}[i - (K/2 - 1)D_n] - w_{1,n}w_{p,n}c_{K,n-1}[i - (K/2)D_n] - \dots$$
$$\dots - w_{1,n}w_{2,n}\dots w_{p,n}c_{K,n-1}[i - (K-1)D_n]$$

$$c_{3,n}[i] = c_{1,n-1}[i] + w_{1,n}c_{2,n-1}[i - D_n] - w_{2,n}c_{3,n-1}[i - 2D_n] - w_{1,n}w_{2,n}c_{4,n-1}[i - 3D_n] + \dots$$
$$\dots + w_{p,n}c_{K,n-1}[i - (K/2 - 1)D_n] + w_{1,n}w_{p,n}c_{K,n-1}[i - (K/2)D_n] + \dots$$
$$\dots - w_{1,n}w_{2,n}\dots w_{p,n}c_{K,n-1}[i - (K-1)D_n]$$

$$c_{4,n}[i] = c_{1,n-1}[i] - w_{1,n}c_{2,n-1}[i - D_n] - w_{2,n}c_{3,n-1}[i - 2D_n] + w_{1,n}w_{2,n}c_{4,n-1}[i - 3D_n] + \dots$$
$$\dots + w_{p,n}c_{K,n-1}[i - (K/2 - 1)D_n] - w_{1,n}w_{p,n}c_{K,n-1}[i - (K/2)D_n] + \dots$$
$$\dots + w_{1,n}w_{2,n}\dots w_{p,n}c_{K,n-1}[i - (K-1)D_n]$$

$$\dots$$

$$c_{K,n}[i] = c_{1,n-1}[i] - w_{1,n}c_{2,n-1}[i - D_n] - w_{2,n}c_{3,n-1}[i - 2D_n] + w_{1,n}w_{2,n}c_{4,n-1}[i - 3D_n] + \dots$$
$$\dots - w_{p,n}c_{K,n-1}[i - (K/2 - 1)D_n] + w_{1,n}w_{p,n}c_{K,n-1}[i - (K/2)D_n] - \dots$$
$$\dots - w_{1,n}w_{2,n}\dots w_{p,n}c_{K,n-1}[i - (K-1)D_n]$$

where $i = 0,1,2,3,\cdots,2^N - 1$; $n = 1,2,\dots N$; $D_n = K^{P_n}$; $K = 2^p$ is the maximum number of complementary sets of orthogonal sequences among them; $\{c_{1,n}[i], c_{2,n}[i],\dots c_{K,n}[i]\}$ are a set of complementary sequences with a length $2^N$; $\delta[i]$ is the Kronecker delta function; i is a whole number that represents the scale of time; $n$ is the iteration number, $D_n$ is a delay elements, $P_n, n=1,2,\dots,2^N$, is any permutation of the numbers $\{0,1,2,\dots,N-1\}$; and $\{w_{1,n},w_{2,n},\dots, w_{p,n}\}$ are P vectors of coefficients with length N where each $w_{x,y}$ is an arbitrary unit magnitude complex number;

21. The method according to claim 2 wherein the sequences are detected and/or correlated according to the following algorithm:

12

$$c_{1,0}[i] = c_{2,0}[i] = c_{3,0}[i] = \ldots = c_{M,0}[i] = \delta[i]$$

$$c_{1,n}[i] = \quad c_{1,n-1}[i] + w_{1,n}c_{2,n-1}[i-(K-1)D_n] + w_{2,n}c_{3,n-1}[i-(K-2)D_n] + w_{1,n}w_{2,n}c_{4,n-1}[i-(K-3)D_n] + \ldots$$
$$\ldots + w_{p,n}c_{K,n-1}[i-(K/2-2)D_n] + w_{1,n}w_{p,n}c_{K,n-1}[i-(K/2-3)D_n] + \ldots$$
$$\ldots + w_{1,n}w_{2,n}\ldots w_{p,n}c_{K,n-1}[i]$$

$$c_{2,n}[i] = \quad c_{1,n-1}[i] - w_{1,n}c_{2,n-1}[i-(K-1)D_n] + w_{2,n}c_{3,n-1}[i-(K-2)D_n] - w_{1,n}w_{2,n}c_{4,n-1}[i-(K-3)D_n] + \ldots$$
$$\ldots + w_{p,n}c_{K,n-1}[i-(K/2-2)D_n] - w_{1,n}w_{p,n}c_{K,n-1}[i-(K/2-3)D_n] - \ldots$$
$$\ldots - w_{1,n}w_{2,n}\ldots w_{p,n}c_{K,n-1}[i]$$

$$c_{3,n}[i] = \quad c_{1,n-1}[i] + w_{1,n}c_{2,n-1}[i-(K-1)D_n] - w_{2,n}c_{3,n-1}[i-(K-2)D_n] - w_{1,n}w_{2,n}c_{4,n-1}[i-(K-3)D_n] + \ldots$$
$$\ldots + w_{p,n}c_{K,n-1}[i-(K/2-2)D_n] + w_{1,n}w_{p,n}c_{K,n-1}[i-(K/2-3)D_n] + \ldots$$
$$\ldots - w_{1,n}w_{2,n}\ldots w_{p,n}c_{K,n-1}[i]$$

$$c_{4,n}[i] = \quad c_{1,n-1}[i] - w_{1,n}c_{2,n-1}[i-(K-1)D_n] - w_{2,n}c_{3,n-1}[i-(K-2)D_n] + w_{1,n}w_{2,n}c_{4,n-1}[i-(K-3)D_n] + \ldots$$
$$\ldots + w_{p,n}c_{K,n-1}[i-(K/2-2)D_n] - w_{1,n}w_{p,n}c_{K,n-1}[i-(K/2-3)D_n] + \ldots$$
$$\ldots + w_{1,n}w_{2,n}\ldots w_{p,n}c_{K,n-1}[i]$$

$$\ldots$$

$$c_{K,n}[i] = \quad c_{1,n-1}[i] - w_{1,n}c_{2,n-1}[i-(K-1)D_n] - w_{2,n}c_{3,n-1}[i-(K-2)D_n] + w_{1,n}w_{2,n}c_{4,n-1}[i-(K-3)D_n] + \ldots$$
$$\ldots - w_{p,n}c_{K,n-1}[i-(K/2-2)D_n] + w_{1,n}w_{p,n}c_{K,n-1}[i-(K/2-3)D_n] - \ldots$$
$$\ldots - w_{1,n}w_{2,n}\ldots w_{p,n}c_{K,n-1}[i]$$

where $i = 0,1,2,3,\ldots 2^N - 1$; $n = 1,2,\ldots N$; $D_n = K^{P_n}$; $K = 2^p$ is the maximum number of complementary sets of orthogonal sequences among them; $\{c_{1,n}[i], c_{2,n}[i], \ldots, c_{K,n}[i]\}$ are a set of complementary sequences with a length $2^N$; $\delta[i]$ is the Kronecker delta function; i is a whole number that represents the scale of time; $n$ is the iteration number, $D_n$ is a delay element, $P_n, n=1,2,\ldots,2^N$, is any permutation of the numbers $\{0,1,2,\ldots,N-1\}$; and $\{w_{1,n}, w_{2,n}, \ldots, w_{p,n}\}$ are P vectors of coefficients with length N where each $w_{x,y}$ is an arbitrary unit magnitude complex number;

**22.** The methods according to claims 18, 19, 20 and 21 wherein $\{w_{1,n}, w_{2,n}, \ldots, w_{p,n}\}$ only take the values +1 and -1 to facilitate implementation of the algorithm using only additions and subtractions.

**23.** The methods according to claims 12,13,14 and 15 wherein the complementary sequences are generated previously and stored in memory and transmitted as said memory is read.

**24.** The methods according to claims 1 and 2 wherein the sets of complementary sequences are orthogonal among each other, i.e., the crossed correlations comma is null for any movement.

**25.** The methods according to claims 1 and 2 wherein the correlation process is implemented efficiently to reduce the number of steps or blocks necessary to obtain the correlation or generation.

**26.** The methods according to claims and 2 wherein the correlation process is implemented efficiently to reduce the quantity of memory necessary to obtain the correlation or generation.

**27.** The methods according to claims 1 and 2 wherein any type of modulation is used to transmit and receive the complementary sequences.

**28.** The methods according to claims 1 and 2 wherein any transformed sequence is used to transform the complementary sequences from timing to frequency.

**29.** The methods according to claims 11 13 and 14 wherein various antennas comprising a multiple input, multiple output system are used.

**30.** The method according to claim 29 wherein detection is used to estimate the channel response, thereby allowing efficient equalization and decreasing the radio signal mix of the various trajectories to the maximum extent.

**31.** The method according to claim 12 where in several cables are used to transmit and receive data.

**32.** The method according to claim 31 wherein detection is used to estimate the channel response, thereby allowing efficient equalization and decreasing diaphony to the maximum extent.

**33.** The methods according to claims 1 and 2 wherein the dynamic scale of the structure for values of $2 \leq K \leq N$ is realized by using switching elements.

**34.** A method of forming a preamble to be used to estimate the means of transmission based on simultaneous transmission of K sets of complementary sequences in systems with K inputs and K outputs.

**35.** The method according to claim 34 wherein, in each input, a set of separate complementary sequences is transmitted simultaneously, sequentially and orthogonally to the complementary sets of sequences transmitted in the rest of the inputs, observing the same order of sequences in each of the inputs.

**36.** The methods according to claim 35 wherein separations are introduced between each of the sequences and/or between the sequences and the rest of the message data transmitted.

FIG. 1 – BLOCK DIAGRAM OF COMPLEMENTARY SEQUENCE GENERATOR

FIG. 2 – BASIC COMBINATIONAL BLOCK DIAGRAM

FIG. 3 – BLOCK DIAGRAM OF COMPLEMENTARY SEQUENCE CORRELATOR

## INTERNATIONAL SEARCH REPORT

| International application No. |
| --- |
| PCT/ ES 2007/000395 |

| A. CLASSIFICATION OF SUBJECT MATTER |
| --- |
| see extra sheet |
| According to International Patent Classification (IPC) or to both national classification and IPC |

| B. FIELDS SEARCHED |
| --- |
| Minimum documentation searched (classification system followed by classification symbols) |
| H04L25/02,H04L27/00,H04B7/04,H04B3/46 |
| Documentation searched other than minimum documentation to the extent that such documents are included in the fields searched |
| Electronic data base consulted during the international search (name of data base and, where practicable, search terms used) |
| CIBEPAT ,EPODOC ,WPI, NPL, XPESP, XPAIP, INSPEC . |

C. DOCUMENTS CONSIDERED TO BE   RELEVANT

| Category* | Citation of document, with indication, where appropriate, of the relevant passages | Relevant to  claim No. |
| --- | --- | --- |
| A | WO 0054424 A2 (TELEFONAKTIEBOLAGET LM ERICSSON) 14.09.2000 | |
| A | Alvarez, F.J.; Urena, J.; Mazo, M.; Hernandez, A. ; Garcia, J.J.; Jimenez, J.A.. "Efficient generator and pulse compressor for complementary sets of four sequences", Electronics Letters Volume 40, Issue 11, 27 May 2004 Page(s):703 - 704 [online][retrieved on 07.11.2007]<br>Retrieved from the internet:<br><URL:http://ieeexplore.ieee.org/iel5/2220/28947/01302819.pdf?tp=&arnumber=1302819&isnumber=28947> | |

☐ Further documents are listed in the continuation of Box C.      ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 19 November 2007        (19.11.2007) | (22/11/2007) |
| Name and mailing address of the ISA/<br>O.E.P.M.<br><br>Paseo de la Castellana, 75 28071 Madrid, España.<br>Facsimile No.   34 91 3495304 | Authorized officer<br><br>J. Botella Maldonado<br><br>Telephone No. +34 91 349 53 82 |

Form PCT/ISA/210 (second sheet) (April 2007)

| INTERNATIONAL SEARCH REPORT<br>Information on patent family members | | International application No.<br><br>PCT/ ES 2007/000395 | |
|---|---|---|---|
| Patent document cited<br>in the search report | Publication<br>date | Patent family<br>member(s) | Publication date |
| WO 0054424 A | 14.09.2000 | CA 2364349 A<br>AU 3688400 A<br>TW 463477 B<br>EP 1159796 A<br>EP 20000915659<br>CN 1367965 A<br>JP 2002539667 T<br>US 6567482 B<br>AU 770399 B | 14.09.2000<br>28.09.2000<br>11.11.2001<br>05.12.2001<br>03.03.2000<br>04.09.2002<br>19.11.2002<br>20.05.2003<br>19.02.2004 |

Form PCT/ISA/210 (patent family annex) (April 2007)

| INTERNATIONAL SEARCH REPORT | International application No. |
| --- | --- |
| | PCT/ ES 2007/000395 |

CLASSIFICATION OF SUBJECT MATTER

*H04L 25/02* (2006.01)
*H04L 27/00* (2006.01)

Form PCT/ISA/210 (extra sheeet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SE 0000433 W
- US 60645526 B
- US 11336018 B
- ES 0100160 W
- ES P200002086
- US 83213804 A
- ES P200401299
- US 83584304 A

### Non-patent literature cited in the description

- **YOO, T. ; GOLDSMITH, A.** Capacity of Fading MIMO Channels with Channel Estimation Error. *IEEE Int. Conf. on Communications,* June 2004
- **B. TAROKH.** Construction of OFDM M-QAM Sequences with Low Peak-to-Average Power Ratio. *IEEE Trans. on Communications,* January 2003, vol. 51 (1
- **S. WANG ; A. ABDI.** periodic complementary sets of sequences-based MIMO frequency selective channel estimation. *IEEE Commun. Lett.,* 2005, vol. 9, 891-893
- **H. CHEN ; J. YEH ; N. SUEHIRO.** A multicarrier CDMA architecture based on orthogonal complementary codes for new generations of wideband wireless communications. *IEEE Commun. Mag.,* October 2001, vol. 39 (10), 126-135
- **D. WU ; P. SPASOJEVIC ; I. SESKAR.** Ternary Complementary Sets of Orthogonal Pulse Based UWB. *Proceedings of the 37th Asilomar Conference on Signals, Systems and Computers,* 10 January 2003, vol. 2, 1776-1780
- **HALFORD, K. ; HALFORD, S. ; WEBSTER, M. ; ANDREN, C.** Complementary Code Keying for RAKE-based indoor Wireless Communication. *Proceedings of the 1999 IEEE International Symposium on Circuits and Systems,* 1999
- **A. LAPIDOTH ; S. MOSER.** Capacity bounds via duality with applications to multiple-antenna systems on flat- fading channels. *IEEE Trans. Inform. Theory,* October 2003, vol. 49, 2426-2467
- **SPASOJEVIC, P. ; GEORGHIADES, C. N.** Complementary sequences for ISI channel estimation. *IEEE Transactions on Information Theory,* March 2001, vol. 47 (3), 1145-1152
- **S. WANG ; A. ABDI.** Aperiodic complementary sets of sequences-based MIMO frequency selective channel estimation. *IEEE Commun. Lett.,* 2005, vol. 9, 891-893
- **MARCEL J. E. GOLAY.** Complementary Series. *IRE Transactions on Information Theory,* April 1961, 82-87
- **C.-C. TSENG ; C.L. LIU.** Complementary Sets of Sequences. *IEEE Trans. Inform. Theory,* September 1972, vol. IT-18 (5), 644-651
- **S.Z. BUDISIN.** Efficient Pulse Compressor for Golay Complementary Sequences. *Elec. Lett.,* 31 January 1991, vol. 27 (3), 219-220
- **POPOVIC, B.M.** Efficient Golay correlator. *Electronics Letters,* 19 August 1999, vol. 35 (17), 1427-1428
- **POPOVIC, B. M.** Efficient Golay correlator. *Electronics Letters,* 19 August 1999, vol. 35 (17), 1427-1428
- **S. WANG ; A. ABDI.** Aperiodic complementary sets ofsequences-based MIMO frequency selective channel estimation. *IEEE Commun. Lett.,* 2005, vol. 9, 891-893
- **F. J. ÁLVAREZ.** Efficient generator and pulse compressor for complementary sets of tour sequences. *IEEE Electronic Letters,* May 2004, vol. 40 (11), 703-704
- **S. WANG ; A. ABDI.** Aperiodic complementary sets of sequences-based MIMO frequency selective channel estimation. *IEEE Commun. Lett,* 2005, vol. 9, 891-893
- **S.Z. BUDISIN.** Efficient Pulse Compressor for Golay Complementary 5 Sequences. *Elec. Lett.,* 31 January 1991, vol. 27 (3), 219-220
- **S.Z. BUDISIN.** Efficient Pulse Compressor for Golay Complementary 5 Sequences. *Elec. Lett.,* 31 January 1991, vol. 27 (3), 219-220